# EUROPÄISCHE PATENTSCHRIFT

(11) **EP 2 022 669 B1**
(45) Veröffentlichungstag und Bekanntmachung des Hinweises auf die Patenterteilung: **17.03.2010**
(21) Anmeldenummer: 08012203.9
(22) Anmeldetag: 07.07.2008
(51) Int. Cl.: B60P 3/38, B60P 3/39

(54) **Arretiervorrichtung, insbesondere für eine Schlafliege eines Nutzfahrzeug-Fahrerhauses**
Stopping device, in particular for a sleeping area of a commercial vehicle driver cab
Dispositif d'arrêt, en particulier pour un couchage d'une cabine de conducteur d'un véhicule utilitaire

(30) Priorität: 08.08.2007 DE 102007037455
(43) Veröffentlichungstag der Anmeldung: 11.02.2009
(73) Patentinhaber: MAN Nutzfahrzeuge Aktiengesellschaft, 80976 München (DE)
(72) Erfinder: Mederle, Günther, Dipl.-Ing., 85051 Ingolstadt (DE); Wenisch, Felix Dipl.-Wi.-Ing., 80469 München (DE); Siflinger, Markus, Dipl.-Ing., 83083 Riedering (DE)

(56) Entgegenhaltungen:
- EP-A- 0 218 902
- EP-A- 0 416 293
- EP-A- 1 522 487
- DE-A1- 10 237 794
- DE-U1- 8 805 684

## Beschreibung

Die Erfindung betrifft eine Arretiervorrichtung für eine Schlafliege eines Nutzfahrzeug-Fahrerhauses, nach dem Oberbegriff des Anspruchs 1.

In Nutzfahrzeug-Fahrerhäusern sind regelmäßig Schlafliegen eingebaut, die nach oben hochgeklappt werden können. Es ist ferner auch bekannt, in LKW-Fahrerhäusern zwei Schlafliegen einzubauen, die beide unabhängig voneinander nach oben geklappt werden können. Das Hochklappen der Schlafliege bzw. einer unteren von zwei Schlafliegen dient dazu, die dort untergebrachten Zubehörteile, wie z. B. Feuerlöscher, Multifunktionslampe, Verbandskasten etc., bequem erreichen zu können. Des weiteren soll dadurch ein Zugang zu evtl. darunter angeordneten Staukästen sowie zu diversen weiteren Stau- und Ablagemöglichkeiten gewährleistet sein. Für eine einfache Zugänglichkeit dieses Bereichs mit beiden Händen ist es bereits allgemein bekannt, eine hochgeklappte Schlafliege gegen unbeabsichtigtes Herabfallen zu sichern. Eine derartige Liegenverriegelung ist beispielsweise aus der gattungsbildenden DE 35 35 750 C2 bekannt. Dort ist konkret eine Arretiervorrichtung für eine hochklappbare Fahrerhaus-Schlafliege beschrieben, die ein Drehfallenschloss mit einem Auslösehebel aufweist. An einer festen Wand des Fahrerhauses ist hier eine komplette Fangvorrichtung befestigt. Diese Fangvorrichtung weist ein Tragteil auf, in dem ein Fangbügel schwenkbar gelagert ist. Diesem Fangbügel ist ein Arretierungsstift zugeordnet, der verrastend in Arretierungsnuten des Tragteils eingreift. Eine Sicherungsscheibe begrenzt eine Auflagescheibe am Bügel, an der eine Druckfeder anliegt, die sich mit ihrem anderen Ende gegen die Seitenwand des Tragteils abstützt und so eine Zugwirkung auf den Arretierungsstift zum Eingreifen in die Arretierungsnuten ausübt. Eine weitere Scheibe ist am fangseitigen Ende des Fangbügels angeordnet. In der hochgeklappten und verriegelten Stellung greift der Fangbügel in ein schlafliegenseitiges Fangmaul ein. Eine derartige Liegenverriegelung ist speziell für Schlafliegen ausgebildet und weist eine Vielzahl von unterschiedlichen Bauteilen aus unterschiedlichen Materialien auf. Dies ist herstellungstechnisch und bauteiltechnisch aufwändig.

Aus der EP 0 416 293 A1 ist eine klappbare Schlafliege im Fahrerhaus eines Nutzfahrzeuges bekannt, bei der für die Arretierung der Schlafliege in ihrer horizontalen Gebrauchslage und in ihrer hochgeklappten Staulage unterschiedliche Fang- und Verriegelungssysteme vorgesehen sind. Die Schnapper sind dabei jeweils wandseitig ortsfest angeordnet, während die Fangelemente ortsfest an der Schlafliege angeordnet sind.

Arretiervorrichtungen sind ferner auch aus der DE 39 28 508 C2, der DE 33 33 879 A1, der DE 102 37 794 A1 und der DE 88 05 684 bekannt. Auch aus diese Ausgestaltungen von Arretiervorrichtungen für Nutzfahrzeug-Fahrerhäuser gilt das zuvor Gesagte.

Demgegenüber ist es Aufgabe der vorliegenden Erfindung, eine Arretiervorrichtung für eine Schlafliege eines Nutzfahrzeug-Fahrerhauses, zu schaffen, die wenig bauteilintensiv und damit preiswert in der Herstellung ist und die zudem einfach bedienbar sowie universell einsetzbar ist.

Diese Aufgabe wird gelöst mit den Merkmalen des Anspruchs 1. Vorteilhafte Ausgestaltungen der Erfindung sind Gegenstand der Unteransprüche.

Gemäß Anspruch 1 sind am Verriegelungselement und am Trägerteil Montagemittel vorgesehen, die eine Montage bzw. Demontage von Trägerteil und Verriegelungselement bei nicht installierter Arretiervorrichtung, zum Beispiel an einer Innenwand eines Fahrerhauses, freigeben und die bei zum Beispiel an einer Innenwand eines Fahrerhauses installierter Arretiervorrichtung eine Demontage von Trägerteil und Verriegelungselement, insbesondere von Trägerteil und einem Schwenkzylinder eines Verriegelungselementes, sperren, und zwar dergestalt, dass das Trägerteil einen Montagefreiraum für das Verriegelungselement aufweist, der in der Gebrauchsposition der Arretiervorrichtung so abgedeckt bzw. versperrt ist, dass das Verriegelungselement nicht in dessen Demontagestellung überführbar ist. Die Montagemittel sind so ausgebildet, dass ein Zusammenführen von Trägerteil und Verriegelungselement nur unter einem vorgegebenen Montagewinkel freigegeben ist, wobei der Montagewinkel so vorgegeben ist, dass das Verriegelungselement in dieser Montagewinkelposition in den Montagefreiraum bewegt ist. Dadurch wird auf einfache Weise sichergestellt, dass bei installierter Arretiervorrichtung auch durch unsachgemäße Betätigung des Verriegelungselementes kein Ablösen von Bauteilen möglich wird, so dass insgesamt eine funktionssichere und einfache Verriegelung von Bauteilen möglich ist.

Die bevorzugte Verwendung der Arretiervorrichtung erfolgt in Verbindung mit einer Schlafliege eines Nutzfahrzeug-Fahrerhauses, insbesondere dergestalt, dass an einer einzigen Seitenwand oder auch an zwei gegenüberliegenden Seitenwänden eines Fahrerhauses derartige Arretiervorrichtungen angebracht sind, so dass bei einer an einer zwischen den beiden Seitenwänden liegenden Rückwand hochklappbar angeordneten Schlafliege sichergestellt ist, dass bei hochgeklappter Schlafliege ein Griffelement des Verriegelungselementes zur Verriegelung der Schlafliege ausgeschwenkt werden kann. Insgesamt wird hier eine besonders einfache, funktionssichere und preiswerte Verriegelungsmöglichkeit für Schlafliegen in Nutzfahrzeug-Fahrerhäusern zur Verfügung gestellt. Der einfache und funktionelle Aufbau erlaubt jedoch auch den Einsatz der Arretiervorrichtung in Verbindung mit anderen Verwendungsfällen, so z. B. generell als Sicherung von Ein- und Anbauteilen bzw. z. B. in Verbindung mit dem Verschluss von Behältnissen. Das heißt, dass die erfindungsgemäße Arretiervorrichtung vielfältigst und universell eingesetzt werden kann, was die Bauteilvielfalt, insbesondere in Verbindung mit Nutzfahrzeugen, weiterhin reduziert.

Mit einer derartigen erfindungsgemäßen Arretiervorrichtung können zudem sowohl Kosten als auch Gewicht eingespart werden, da diese im Wesentlichen lediglich aus zwei bzw. gegebenenfalls in Verbindung mit einem zusätzlichen Abdeckelement, das aus optischen Gründen vorgesehen sein kann, aus drei Bauteilen besteht. Alternativ zu einer derartigen zusätzlichen Abdeckung besteht aber auch die Möglichkeit, das Trägerteil z. B. im Sinne einer Abdeckung mit Polyurethan (z. B. Skin-Form) zu schäumen oder mit einem entsprechenden Sichtmaterial zu umspritzen, z. B. mit TPE im Spritzguss. Da eine derartige Abdeckung bzw. Umschäumung oder Umspritzung somit keinerlei technische Funktion bezüglich der Arretiervorrichtung im eigentlichen Sinne übernimmt, wird mittels der erfindungsgemäßen Arretiervorrichtung eine Verriegelungsmöglichkeit von Bauteilen, insbesondere von Schlafliegen für Nutzfahrzeug-Fahrerhäuser, zur Verfügung gestellt, die im Wesentlichen aus zwei Bauteilen, insbesondere aus zwei Kunststoff-Bauteilen besteht, in denen z. B. die Funktionen Drehen, Einleiten linearer Kräfte, Einleitung von Biegekräften, Fixierung, Arretierung, Verriegelung, Anschlag integriert sind.

Gemäß einer besonders bevorzugten Ausgestaltung ist vorgesehen, sowohl das Verriegelungselement als auch das Trägerteil aus einem gleichen Material, nämlich bevorzugt einem Kunststoffmaterial herzustellen. Gemäß einer bevorzugten Ausgestaltung hierzu ist das Kunststoffmaterial ein faserverstärkter Kunststoff, das einen Faseranteil zwischen 10 und 60%, bevorzugt von in etwa 50% aufweist.

Im Sinne der zuvor erläuterten Bauteilintegration ist das Verriegelungselement selbst bevorzugt als ein im montierten Zustand der Arretiervorrichtung frei zugängliches Betätigungs- oder Griffelement ausgebildet, das integral und materialeinheitlich mit dem Schwenkzylinder verbunden ist.

Auch für den Fall, dass eine zusätzliche Abdeckung vorgesehen sein sollte, wird vorgeschlagen, dieses aus dem gleichen Material wie das Trägerteil und das Verriegelungselement herzustellen. Diese Abdeckung deckt im montierten Zustand bevorzugt einen Schwenkzylinder des Verriegelungselementes wenigstens bereichsweise ab. Grundsätzlich könnte die Abdeckung jedoch auch zusammen mit dem Trägerteil ein Schwenkzylinderlager ausbilden.

Gemäß einer weiteren bevorzugten Ausgestaltung wird vorgeschlagen, dass das Trägerteil, gegebenenfalls zusammen mit einer Abdeckung, einen Anschlag als Widerlager für ein zu arretierendes Bauteil ausbildet. Dieser Anschlag ist insbesondere für eine kompakte Bauweise in einem verriegelungselementnahen Bereich angeordnet. Mit einem derartigen Aufbau wird eine vorteilhafte Verriegelung des zu verriegelnden Bauteils auf einfache Weise zwischen Anschlag und Verriegelungselement erzielt. Insbesondere für den Fall, dass die Verriegelung zwischen Anschlag und einem Griffelement eines Verriegelungselementes erfolgt, ergibt sich eine weitere Funktionsintegration, da das Griffelement in einer Doppelfunktion zum einen als Griffelement für eine Handbetätigung und zum anderen als Riegel zur Verriegelung des zu verriegelnden Bauteils dient.

Gemäß einer besonders bevorzugten Ausgestaltung ist vorgesehen, dass das Trägerteil als Montagefreiraum eine fensterartige Montageausnehmung für ein Verriegelungselement aufweist, und zwar insbesondere für ein Griffelement des Verriegelungselementes. Dieser Montagefreiraum ist so angeordnet und gestaltet, dass z. B. in Verbindung mit einer an einer Innenwand eines Nutzfahrzeuges installierten Gebrauchsposition der Arretiervorrichtung der Montagefreiraum so abgedeckt bzw. versperrt oder dergleichen ist, dass das Verriegelungselement, insbesondere ein Griffelement des Verriegelungselementes nicht so weit in Richtung Montagefreiraum verlagert werden kann, dass das Verriegelungselement in dessen Montagestellung überführt werden kann. Die Abdeckung bzw. Versperrung des Montagefreiraums erfolgt hier somit vorzugsweise mittels einer Montagewand bzw. Innenwand eines Nutzfahrzeug-Fahrerhauses, an der das Trägerteil ohnehin anzuordnen ist, so dass dafür keine zusätzlichen baulichen Maßnahmen erforderlich sind. Besonders bevorzugt ist hierzu das Trägerteil als Trägerplatte mit einer wenigstens bereichsweise eine ebene Montagefläche ausbildenden Rückwand ausgebildet, in der der Montagefreiraum vorgesehen wird.

Am Trägerteil können ferner auch noch Durchgangslöcher als Schraublöcher für eine Schraubverbindung des Trägerteils mit einem vorgegebenen Anbringungsort vorgesehen sein.

Gemäß einer konkreten Ausgestaltung kann zudem vorgesehen sein, dass die Montagemittel so ausgebildet sind, dass ein Zusammenführen von Trägerteil und Schwenkzylinder nur unter einem vorgegebenen Montagewinkel freigegeben ist. Bevorzugt ist hierbei der Montagewinkel so vorgegeben, dass das Verriegelungselement, insbesondere ein Griffelement des Verriegelungselementes in dieser Montagewinkelposition in den Montagefreiraum, wie er soeben gewürdigt worden ist, bewegt werden kann. Dadurch wird somit auf einfache Weise, wie zuvor bereits erläutert, durch die Montagewand, z. B. eine Innenraumwand des Fahrerhauses, in einer Doppelfunktion gleichzeitig sichergestellt, dass im installierten Zustand der Arretiervorrichtung eine zerstörungsfreie Demontage der Arretiervorrichtung, insbesondere Demontage des Verriegelungselementes vom Trägerteil, nicht möglich ist. Bezogen auf eine derartige Träger- bzw. Montagewand, z. B. eine Innenwand eines Fahrerhauses eines Nutzfahrzeuges kann der Montagewinkel z. B. in einem Bereich von -10 bis -30° gegen die gedachte Montagewand geneigt vorgesehen sein. Gemäß einer besonders bevorzugten Ausgestaltung beträgt der Montagewinkel in einem solchen Fall -20°.

Gemäß einer weiteren besonders bevorzugten Ausgestaltung kann ferner vorgesehen sein, dass die Montagemittel so ausgebildet sind, dass ein Verschwenken des Schwenkzylinders nach dessen "Einfädeln" in das Trägerteil entlang eines vorgegebenen Einfädelweges relativ zum Trägerteil freigegeben ist, und zwar so freigegeben ist, dass der Schwenkzylinder mit einem vorgegebenen Schwenkzylinderbereich mit wenigstens einer trägerteilseitigen Lagerschale in eine gleitende Anlageverbindung gelangt. Das heißt, dass z. B. durch das Verschwenken des Verriegelungselementes in eine sogenannte 90°-Position diejenigen Bereiche des Schwenkzylinders an den Lagerelementen, insbesondere Lagerschalen des Trägerteils voll zum Eingriff gelangen, die eine im Wesentliche kreiszylindrische Außenkontur aufweisen, so dass das Verriegelungselement in gewünschter Weise Biegemomente aufnehmen kann. Gemäß einer bevorzugten Ausgestaltung ist vorgesehen, dass die Montagemittel insbesondere durch wenigstens eine schwenkzylinderseitig vorgesehene, radiale Abflachung ausgebildet sind, die mit einem entsprechenden trägerteilseitigen Gegenelement zusammenwirkt.

Eine größere konstruktive Freiheit ergibt sich für den Fall, dass mehrere in Schwenkachsenrichtung beabstandete Lager- bzw. Lagerhalbschalen am Trägerteil vorgesehen sind. So können insbesondere in Verbindung mit am Schwenkzylinder angeordneten, radial oder bezogen auf die Schwenkzylinderachse schräg verlaufenden Anschlägen zur axialen Festlegung des Schwenkzylinders und damit des Verriegelungselementes am Trägerteil vorgesehen sein, derartige Anschläge die z. B. durch Ringflansche gebildet sind, in Axialrichtung gesehen formschlüssig zwischen zwei voneinander beabstandeten Lagerschalen aufnehmen zu lassen. Damit kommt den Lagerschalen in einer vorteilhaften Doppelfunktion neben der eigentlichen Verriegelungselement- bzw. Schwenkzylinderlagerung auch eine Funktion als Axialsicherung zu. Auch hierbei handelt es sich wieder um ein Merkmal, das wesentlich zur Bauteil- und Funktionsintegration beiträgt.

Gemäß einer weiteren besonders bevorzugten Ausgestaltung kann ferner vorgesehen sein, dass zur Fixierung des Verriegelungselementes in der Freigabeposition und in der Verriegelungsposition eine Fixiereinrichtung vorgesehen ist, die z. B. überdrückbar oder aber auch mittels der Hand betätigbar ausgebildet sein kann. Auch Kombinationen von überdrückbar und betätigbar sind möglich. Unter Überdrückbar wird dabei verstanden, dass bei einer Handbetätigung der Arretiervorrichtung eine Verriegelung des Verriegelungselementes in der jeweils gewählten Position selbsttätig erfolgt, während unter Betätigbar verstanden wird, dass für die Verriegelung des Verriegelungselementes eine zusätzliche Handbetätigung des Bedieners erforderlich ist, z. B. ein Arretierstift oder dergleichen verlagert wird.

Besonders bevorzugt in diesem Zusammenhang ist ein am Trägerteil integral und materialeinheitlich angeordnetes überdrückbares, elastisch rückfederndes Rastelement in Form einer elastisch rückfedernden Rastnase, die sowohl in der Freigabeposition als auch in der Verriegelungsposition selbsttätig in ein schwenkzylinderseitiges Gegenelement, das insbesondere als eine Rastnut ausgebildet ist, formschlüssig eingreift. Bevorzugt ist vorgesehen, hierzu um 90° versetzte Rastnuten am Schwenkzylinder vorzusehen.

Die Erfindung wird nachfolgend anhand einer Zeichnung näher erläutert.

Es zeigen:
- Fig.1: schematisch einen Zusammenbau einer Ausführungsform der erfindungsgemäßen Arretiervorrichtung,
- Fig. 2: einen Zusammenbau gemäß Fig. 1 in auseinandergezogener Darstellung,
- Fig. 3: eine vergrößerte Detaildarstellung der Einzelheit A der Fig. 2,
- Fig. 4: eine vergrößerte Darstellung der Einzelheit B der Fig. 2,
- Fig. 5: schematisch eine perspektivische Darstellung eines Fahrerhauses mit abgeklappter Schlafliege,
- Fig. 6: schematisch eine vergrößerte Detaildarstellung einer Einzelheit der Fig. 5,
- Fig. 7: eine der Fig. 5 entsprechende Darstellung mit hochgeklappter Schlafliege,
- Fig. 8: eine vergrößerte Detaildarstellung einer Einzelheit der Fig. 7,
- Fig. 9: eine Trägerplatte mit integrierter Kunststoff-Rastfeder,
- Fig. 10: eine vergrößerte Detaildarstellung der Einzelheit C der Fig. 9,
- Fig. 11: eine vergrößerte Detaildarstellung der Einzelheit D der Fig. 9, und
- Fig. 12 bis 14: unterschiedliche Montageschritte des in der Fig. 1 dargestellten Zusammenbaus.

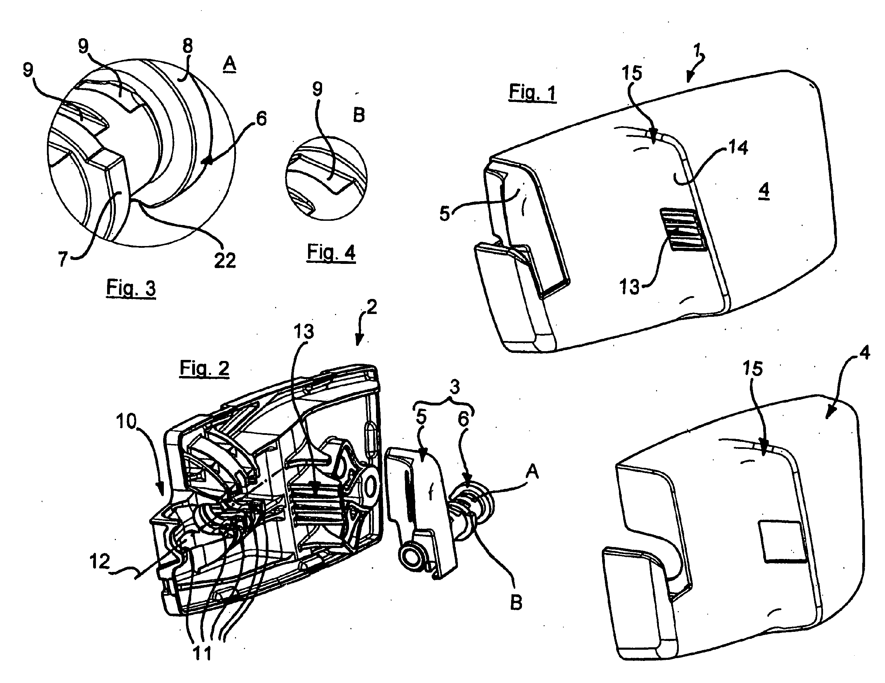

In der Fig. 1 ist ein Zusammenbau einer Ausführungsform einer erfindungsgemäßen Arretiervorrichtung 1 gezeigt, die, wie dies aus der perspektivischen und auseinandergezogenen Darstellung der Fig. 2 hervorgeht, aus einer Trägerplatte 2, einem Verriegelungselement 3 sowie optional einer Abdeckung 4 aufgebaut ist.

Wie dies der Fig. 2 weiter zu entnehmen ist, besteht das aus einem Kunststoffmaterial, insbesondere einem glasfaserverstärkten Kunststoffmaterial hergestellte Verriegelungselement aus einem Griffelement 5, mit dem integral und einstückig ein Schwenkzylinder 6 verbunden ist. Das Griffelement 5 wirkt dabei als auf den Schwenkzylinder 6 aufgesetzt, das heißt ragt in etwa rechtwinklig von diesem weg.

Wie dies insbesondere den Einzelheiten A und B der Fig. 3 und 4 entnommen werden kann, sind am Schwenkzylinder 6 voneinander beabstandete im Wesentlichen ringförmige Ringflansche 7, 8 vorgesehen, die im Wesentlichen radial umlaufend am Schwenkzylinder 6 ausgebildet sind. Zudem sind am Schwenkzylinder 6 mehr oder weniger radial verlaufende Abflachungen 9 vorgesehen, deren Funktionsweise nachher noch näher erläutert wird.

Wie dies der Fig. 2 weiter entnommen werden kann, weist die Trägerplatte 2 im Bereich eines fensterartigen Montagefreiraums 10 mehrere U-förmig bzw. halbschalenförmig ausgebildete Lagerschalen 11 auf, die voneinander in Richtung einer Schwenkachse 12 gesehen beabstandet sind.

Wie dies in den Figuren nicht im Detail dargestellt ist, sondern lediglich dem Zusammenbau der Arretiervorrichtung 1 der Fig. 1 entnommen werden kann, wird das Verriegelungselement 3 so in die Lagerschalen 11 an der Trägerplatte 2 eingesetzt, dass die Ringflansche 7, 8 in Richtung der Schwenkachse 12 als Axialrichtung gesehen formschlüssig zwischen diesen Lagerschalen 11 gehalten sind, so dass das Verriegelungselement 3 insgesamt in Axialrichtung unverschiebbar axial gehalten ist. Dagegen liegen insbesondere die nicht mit Abflachungen 9 versehenen Schwenkzylinderbereiche flächig in den Lagerhalbschalen 11 an, um darin in noch zu erläuternder Weise zwischen einer Freigabeposition als Grundposition, wie sie in der Fig. 1 gezeigt ist und einer Verriegelungsposition verschwenkbar aufgenommen zu sein.

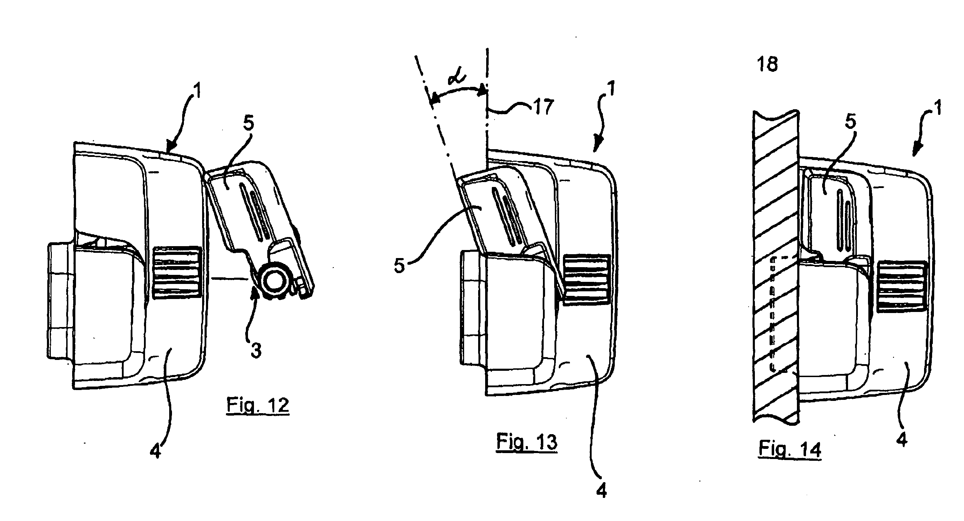

Die Abflachungen 9 wirken so mit entsprechenden Formgebungselementen an der Trägerplatte 2, insbesondere im Bereich der Lagerschalen 11 zusammen, dass, wie dies in den Fig. 12 bis 14 dargestellt ist, ein Zusammenbau, das heißt ein Einfädeln des Verriegelungselementes 3 mit seinem Schwenkzylinder 6 in den Lagerhalbschalen 11 nur dann möglich ist, wenn das Griffelement 5 des Verriegelungselementes 3 einen Montagewinkel α von z. B. ca. -20° bezogen auf eine im Rahmen der Montage gedachte und durch die Trägerplatte 2 ausgebildete Ebene 17 aufweist (Fig. 13). Die Abflachungen 9 sind zusammen mit den trägerplattenseitigen Gegenelementen dabei so ausgebildet, dass ein Verschwenken des Schwenkzylinders 6 in seine in der Fig. 14 gezeigte Null-Position nach dem Einfädeln des Schwenkzylinders 6 in die Lagerhalbschalen 11 entlang eines vorgegebenen Einfädelwegs relativ zu den Lagerhalbschalen 11 freigegeben ist, so dass der Schwenkzylinder 6, wie zuvor geschildert, insbesondere mit seinen kreiszylindrischen und keine Abflachungen 9 aufweisenden Zylinderbereichen in vollem Eingriff mit den Lagerhalbschalen 11 steht und damit in eine gleitende Anlageverbindung an den Lagerhalbschalen 11 gelangt.

Mit einer derartigen Maßnahme ist sichergestellt, wie die beispielhafte Befestigung der Arretiervorrichtung 1 mittels der Trägerplatte 2 an einer Seitenwand 18 eines Fahrerhauses 19 eines Nutzfahrzeuges zeigt, dass das Verriegelungselement 3 bzw. das Griffelement 5 nicht durch den Montagefreiraum 10 an der Trägerplatte 2 hindurch, wie dies bei der Zusammenbauposition der Fig. 13 der Fall ist, hindurchbewegt werden kann, so dass im installierten Zustand der Arretiervorrichtung 1, wie dies in der Fig. 14 dargestellt ist, eine zerstörungsfreie Demontage der Arretiervorrichtung, insbesondere des Verriegelungselementes 3 von der Trägerplatte 2 nicht möglich ist.

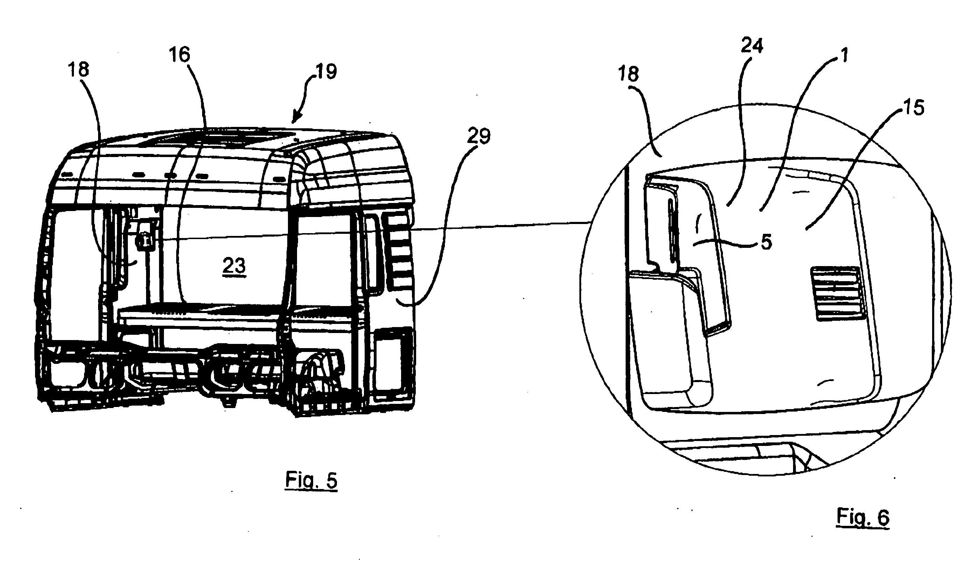

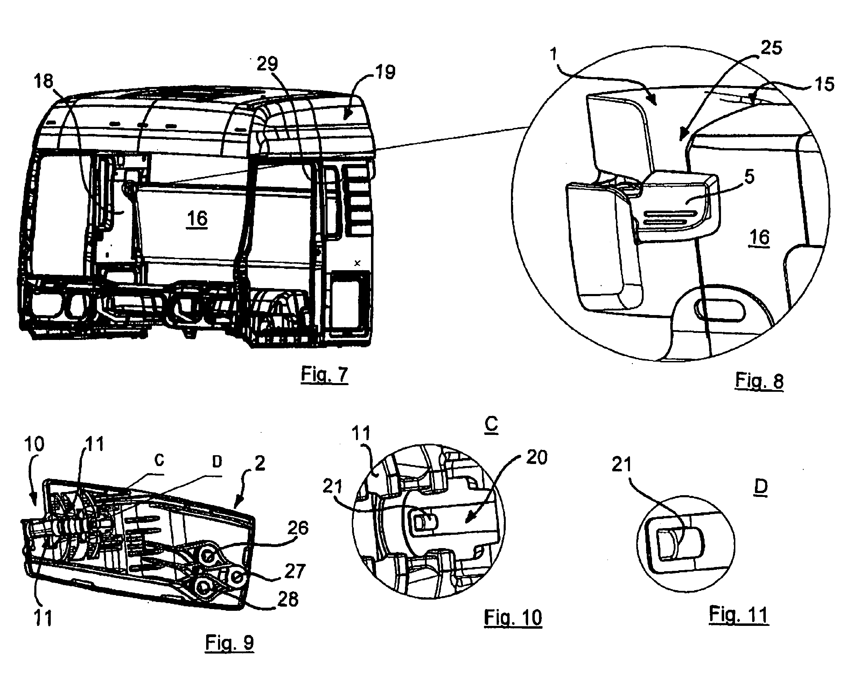

An der Trägerplatte 2 ist ferner noch ein Anschlagelement 13 ausgebildet, das zusammen mit einer entsprechenden Auswölbung 14 an der Abdeckung 4 einen Anschlag 15 als Widerlager für eine Schlafliege 16 darstellt, wie dies nachfolgend in Verbindung mit den Fig. 6 und 8 noch näher erläutert wird.

Wie dies weiter den Fig. 9 bis 11 entnommen werden kann, ist bevorzugt im Bereich der Lagerhalbschalen 11 der Trägerplatte 2 zudem eine Kunststofffeder 20 vorgesehen, die eine Rastnase 21 aufweist. Diese Kunststofffeder 20 ist im Bereich der Lagerhalbschalen 11 trägerplattenseitig so elastisch rückfedernd und damit materialeinheitlich und einstückig an der Trägerplatte 2 angebunden, dass im montierten, eingesetzten Zustand des Verriegelungselementes die Rastnase in jeder der beiden in der Fig. 6 und Fig. 8 dargestellten Verriegelungselementpositionen formschlüssig in eine schwenkzylinderseitige Rastnut als Gegenelement eingreift. Eine derartige Rastnut kann grundsätzlich an jeder Stelle des Schwenkzylinders 6 vorgesehen sein, die entsprechend der jeweils konkreten Ausgestaltung geeignet erscheint. Lediglich beispielhaft ist die Rastnut 22 in der Fig. 3 im Bereich des Ringflansches 8 dargestellt.

Wie dies nunmehr den Fig. 5 und 7 im Detail entnommen werden kann, befindet sich an einer Rückwand 23 des Fahrerhauses 19 eine hochklappbar und daran angelenkte Schlafliege 16. Diese Schlafliege ist in der Fig. 5 in ihre horizontale Gebrauchsstellung abgeklappt. Wie dies der Fig. 6 als vergrößerter Einzelheit aus der Darstellung der Fig. 5 entnommen werden kann, befindet sich die an einer Seitenwand 18 des Fahrerhauses 19 angeordnete Arretiervorrichtung 1 in ihrer Freigabe- bzw. Grundposition 24.

Wie der Vergleich mit den Fig. 7 und 8 zeigt, befindet sich die Schlafliege 16 in der Fig. 7 in ihrer hochgeklappten Stellung, bei der die Schlafliege am Anschlag 15 der Arretiervorrichtung 1 anliegt, während gleichzeitig das Griffelement 5 und damit das Verriegelungselement 3 in die Verriegelungsposition 25 überführt ist, in der die Schlafliege 16 mit ihrem Eckrandbereich zwischen dem Anschlag 15 als Widerlager und dem Griffelement 5 in der hochgeklappten Stellung gehalten wird. Sowohl in der Freigabeposition 24 als auch in der Verriegelungsposition 25 rastet jeweils die Rastnase 21 der Kunststofffeder 20 in die entsprechenden Rastnuten am Schwenkzylinder 6 des Verriegelungselementes 3 ein, so dass das Verriegelungselement 3 und damit auch das Griffelement 5 jeweils funktionssicher in der in der Fig. 6 und 8 gezeigten Position gehalten werden.

Wie dies der Fig. 2 und auch der Fig. 9 weiter entnommen werden kann, befindet sich an der Trägerplatte 2 ferner noch eine Anordnung von drei Durchgangslöchern 26, 27, 28 mittels denen die Trägerplatte 2 funktionssicher mit der Seitenwand 18 des Fahrerhauses 19 verschraubt werden können.

In der Darstellung der Fig. 5 und 7 ist jeweils nur eine einzige Arretiervorrichtung 1 an einer Seitenwand 18 gezeigt. Grundsätzlich besteht auch die Möglichkeit, dass an der gegenüberliegenden Seitenwand 29 des Fahrerhauses innenraumseitig eine gleich ausgebildete und analog angeordnete Arretiervorrichtung 1 vorgesehen ist, für eine beidseitige Verriegelung der Schlafliege 16.

## Patentansprüche

1. Arretiervorrichtung für eine Schlafliege eines Nutzfahrzeug-Fahrerhauses,
mit einem Trägerteil (2), an dem ein Verriegelungselement (3) zwischen einer Freigabeposition und einer Verriegelungsposition um eine Schwenkachse verschwenkbar gelagert ist,
**dadurch gekennzeichnet,**
**dass** am Verriegelungselement (3) und am Trägerteil (2) Montagemittel. (9) vorgesehen sind, die eine Montage bzw. Demontage von Trägerteil (2) und Verriegelungselement (3) bei nicht installierter Arretiervorrichtung (1) freigeben und die bei installierter Arretiervorrichtung (1) eine Demontage von Trägerteil (2) und Verriegelungselement (3) sperren, dergestalt, dass das Trägerteil (2) einen Montagefreiraum (10) für das Verriegelungselement (3) aufweist, der in der Gebrauchsposition der Arretiervorrichtung (1) so abgedeckt bzw. versperrt ist, dass das Verriegelungselement (3) nicht in dessen Demontagestellung überführbar ist, und
**dass** die Montagemittel (9) so ausgebildet sind, dass ein Zusammenführen von Trägerteil (2) und Verriegelungselement (3) nur unter einem vorgegebenen Montagewinkel (α) freigegeben ist, wobei der Montagewinkel so vorgegeben ist, dass das Verriegelungselement (3) in dieser Montagewinkelposition in den Montagefreiraum (10) bewegt ist.

2. Arretiervorrichtung, nach Anspruch 1, **dadurch gekennzeichnet, dass** das Verriegelungselement (3) zudem ein im montierten Zustand der Arretiervorrichtung (1) frei zugängliches Betätigungs- oder Griffelement (5) aufweist, das integral und materialeinheitlich mit dem Schwenkzylinder (6) verbunden ist.

3. Arretiervorrichtung nach Anspruch 2, **dadurch gekennzeichnet, dass** das Trägerteil (2) und das Verriegelungselement (3) aus einem gleichen Material, bevorzugt einem Kunststoffmaterial, höchst bevorzugt aus einem faserverstärkten Kunststoffmaterial gebildet sind.

4. Arretiervorrichtung nach Anspruch 3, **dadurch gekennzeichnet, dass** das faserverstärkte, insbesondere glasfaserverstärkte Kunststoffmaterial einen Faseranteil zwischen 10 und 60%, bevorzugt von in etwa 50% aufweist.

5. Arretiervorrichtung nach einem der Ansprüche 1 bis 4, dass als zusätzliches Bauteil der Arretiervorrichtung (1) eine Abdeckung (4) vorgesehen ist, und
dass die Abdeckung (4) im montierten Zustand einen Schwenkzylinder (6) des Verriegelungselementes (3) wenigstens bereichsweise abdeckt und/oder zusammen mit dem Trägerteil (2) ein Schwenkzylinderlager (11) ausbildet.

6. Arretiervorrichtung, nach einem der Ansprüche 1 bis 5, **dadurch gekennzeichnet, dass** das Trägerteil (2) gegebenenfalls zusammen mit einer Abdeckung (4) einen Anschlag (13) als Widerlager für ein zu arretierendes Bauteilausbildet dergestalt, dass bei gleichzeitig in die Verriegelungsposition (25) verschwenktem Verriegelungselement (3) das zu verriegelnde Bauteil zwischen Anschlag (13) und Verriegelungselement (3) gehalten ist.

7. Arretiervorrichtung nach einem der Ansprüche 1 bis 6, **dadurch gekennzeichnet, dass** die Montagemittel (9) ferner so ausgebildet sind, dass ein Verschwenken eines Schwenkzylinders (6) eines Verriegelungselementes (3) nach dessen Einfädeln in das Trägerteil (2) entlang eines vorgegebenen Einfädelweges relativ zum Trägerteil (2) freigegeben ist dergestalt, dass der Schwenkzylinder (6) mit einem vorgegebenen Schwenkzylinderbereich mit wenigstens einer trägerteilseitigen Lagerschale (11) in eine gleitende Anlageverbindung gelangt.

8. Arretiervorrichtung nach Anspruch 7, **dadurch gekennzeichnet, dass** mehrere in Schwenkachsenrichtung beabstandete Lager- bzw. Lagerhalbschalen (11) am Trägerteil (2) vorgesehen sind.

9. Arretiervorrichtung nach einem der Ansprüche 1 bis 8, **dadurch gekennzeichnet, dass** an einem Schwenkzylinder (6) des Verriegelungselementes (3) wenigstens ein Axial-Anschlagelement (7, 8) vorgesehen ist für eine axiale Festlegung des Schwenkzylinders (6) und damit Verriegelungselementes (3).

10. Arretiervorrichtung nach Anspruch 8 und Anspruch 9, **dadurch gekennzeichnet, dass** mehrere voneinander in Schwenkzylindererstreckungsrichtung beabstandete Anschläge (7, 8) vorgesehen sind, von denen in Axialrichtung gesehen wenigstens einer formschlüssig zwischen zwei voneinander beabstandeten Lagerschalen (11) aufgenommen ist.

11. Arretiervorrichtung nach einem der Ansprüche 1 bis 10, **dadurch gekennzeichnet, dass** zur Fixierung des Verriegelungselementes (3) in der Freigabeposition (24) und in der Verriegelungsposition (25) eine Fixiereinrichtung (20, 21, 22) vorgesehen ist, die überdrückbar oder betätigbar ausgebildet ist.

12. Arretiervorrichtung nach Anspruch 11, **dadurch gekennzeichnet, dass** am Trägerteil (2) ein überdrückbares, elastisch rückfederndes Rastelement (20) als Fixiereinrichtung vorgesehen ist, die in der Freigabeposition (24) und in der Verriegelungsposition (25) in ein schwenkzylinderseitiges Gegenelementeingreift und damit das Verriegelungselement (3) in Position hält.

13. Arretiervorrichtung nach Anspruch 12, **dadurch gekennzeichnet, dass** das Rastelement (20) aus Kunststoff hergestellt ist und materialeinheitlich und einstückig mit dem Trägerteil (2) verbunden ist.

14. Arretiervorrichtung nach Anspruch 12 oder 13, **dadurch gekennzeichnet, dass** in Radialrichtung um 90° versetzte Rastnuten (22) am Schwenkzylinder (6) vorgesehen sind, in die eine trägerelementseitige Rastnase (21) in der Freigabeposition (24) und in der Verriegelungsposition (25) formschlüssig eingreift.

15. Arretiervorrichtung nach einem der Ansprüche 1 bis 14, **dadurch gekennzeichnet, dass** am Trägerteil (2) Durchgangslöcher (26, 27, 28) als Schraublöcher für eine Schraubverbindung des Trägerteils mit einem vorgegebenden Anbringungsort vorgesehen sind.

16. Arretiervorrichtung nach einem der Ansprüche 1 bis 15, **dadurch gekennzeichnet, dass** das Trägerteil als Trägerplatte (2) mit einer wenigstens bereichsweise eine Montagefläche ausbildenden Rückwand ausgebildet ist.

17. Arretiervorrichtung nach einem der Ansprüche 1 bis 16, **dadurch gekennzeichnet, dass** eine Arretiervorrichtung (1) mittels des zugeordneten Trägerteils an einer einzigen Seitenwand (18) oder bevorzugt auf gleicher Höhe an gegenüberliegenden Seitenwänden (18,29) eines Fahrerhauses (19) angebracht ist dergestalt, dass die Verriegelungselement-Schwenkachse (12) im Wesentlichen in Fahrzeuglängsrichtung verläuft, und
dass zwischen den beiden Seitenwänden (18, 29) eine Rückwand (23) vorgesehen ist, an der eine Schlafliege (16) hochklappbar angeordnet ist dergestalt, dass ein Griffelement (5) des Verriegelungselementes (3) zur Verriegelung der Schlafliege (16) in ihrer an die Rückwand (23) hochgeklappten Stellung im Wesentlichen in Fahrzeugquerrichtung ausschwenkbar ist.

## Claims

1. Stopping device for a sleeping area of a commercial vehicle driver cab,
with a support part (2), on which a locking element (3) is mounted in a manner allowing it to be pivoted around a swivelling axis between a release position and a locking position, **characterised in that** mounting means (9) are provided on the locking element (3) and on the support part (2), which mounting means permit the support part (2) and locking element (3) to be mounted or demounted if the stopping device (1) is not installed and which mounting means prevent the support part (2) and locking element (3) from being demounted if the stopping device (1) is installed, such that the support part (2) features a mounting clearance (10) for the locking element (3), which clearance is covered or locked in such a way in the installation position of the stopping device (1) that the locking element (3) cannot be moved to its demounting position, and
the mounting means (9) are designed such that the support part (2) and locking element (3) can only be brought together at a predetermined mounting angle (0), whereby the mounting angle is predetermined such that the locking element (3) is moved into the mounting clearance (10) in this mounting angle position.

2. Stopping device in accordance with claim 1, **characterised in that** the locking element (3) also features an operating or handle element (5) that is freely accessible when the stopping device (1) is in its mounted state, which operating or handle element is integrally connected to and made of the same material as the pivotable cylinder (6).

3. Stopping device in accordance with claim 2, **characterised in that** the support part (2) and the locking element (3) are made from the same material, preferably a plastic material and most preferably a fibre-reinforced plastic material.

4. Stopping device in accordance with claim 3, **characterised in that** the fibre-reinforced, particularly glass fibre-reinforced, plastic material has a fibre content of between 10 and 60%, preferably of approx. 50%.

5. Stopping device in accordance with one of claims 1 to 4, **characterised in that** a cover (4) is provided as an additional component of the stopping device (1) and
that the cover (4) in its mounted state at least partially covers a pivotable cylinder (6) of the locking element (3) and/or forms a pivotable cylinder bearing (11) together with the support part (2).

6. Stopping device in accordance with one of claims 1 to 5, **characterised in that** the support part (2), together with a cover (4) if necessary, forms a stop (13) as an abutment for a component to be stopped, such that the component to be locked is held between the stop (13) and the locking element (3) at the same time as the locking element (3) has been pivoted into the locking position (25).

7. Stopping device in accordance with one of claims 1 to 6, **characterised in that** the mounting means (9) are further designed such that a pivotable cylinder (6) of a locking element (3) can be pivoted after its insertion into the support part (2) along a predetermined insertion path relative to the support part (2), such that the pivotable cylinder (6) with a predetermined pivotable cylinder area comes into a sliding contact connection with at least one bearing shell (11) on the support part side.

8. Stopping device in accordance with claim 7, **characterised in that** several bearing shells or half bearing shells (11) located at a distance from one another in the direction of the swivelling axis are provided on the support part (2).

9. Stopping device in accordance with one of claims 1 to 8, **characterised in that** at least one axial stop element (7, 8) for axially fixing the pivotable cylinder (6) and therefore the locking element (3) is provided on a pivotable cylinder (6) of the locking element (3).

10. Stopping device in accordance with claim 8 and claim 9, **characterised in that** several stops (7, 8) are provided at a distance from one another in the direction in which the pivotable cylinder extends, of which at least one stop, seen in the axial direction, is mounted positively between two bearing shells (11) located at a distance from one another.

11. Stopping device in accordance with one of claims 1 to 10, **characterised in that** a fixing device (20, 21, 22) is provided for fixing the locking element (3) in the release position (24) and in the locking position (25), which fixing device is designed to be able to be pressed over or operated.

12. Stopping device in accordance with claim 11, **characterised in that** a detent element (20) that can be pressed over and flexibly springs back is provided on the support part (2) as a fixing device that, in the release position (24) and the locking position (25), engages in a counter element on the pivotable cylinder side, thereby holding the locking element (3) in position.

13. Stopping device in accordance with claim 12, **characterised in that** the detent element (20) is made of plastic and is made of the same material as and forms one unit with the support part (2).

14. Stopping device in accordance with claim 12 or claim 13, **characterised in that** detent grooves (22) rotated 90° in the radial direction are provided on the pivotable cylinder (6), into which grooves a detent lug (21) on the support part side engages positively in the release position (24) and in the locking position (25).

15. Stopping device in accordance with one of claims 1 to 14, **characterised in that** through-holes (26, 27, 28) are provided on the support part (2) as screw holes for connecting the support part to a predetermined attachment location by means of a screw connection.

16. Stopping device in accordance with one of claims 1 to 15, **characterised in that** the support part is designed as a bearing plate (2) with a rear wall that at least partially forms a mounting surface.

17. Stopping device in accordance with one of claims 1 to 16, **characterised in that** a stopping device (1) is attached to a single side wall (18), or preferably at the same height to opposing side walls (18, 29), of a driver cab (19) by means of the assigned support part, such that the swivelling axis of the locking element (12) essentially runs in the longitudinal direction of the vehicle and
**in that** a rear wall (23) is provided between both side walls (18, 29), on which a sleeping area (16) that can be folded up is attached, such that a handle element (5) of the locking element (3) for locking the sleeping area (16) in its folded position on the rear wall (23) can essentially be pivoted in the traverse direction of the vehicle.

## Revendications

1. Dispositif d'arrêt pour une couchette d'une cabine de véhicule industriel
avec un élément porteur (2) sur lequel est logé un élément de verrouillage (3) de manière pivotable selon un axe de pivotement entre une position de déblocage et une position de verrouillage, **caractérisé en ce que** des éléments de montage (9) sont prévus sur l'élément de verrouillage (3) et l'élément porteur (2) permettant de débloquer le montage ou le démontage de l'élément porteur (2) et de l'élément de verrouillage (3) lorsque le dispositif d'arrêt (1) n'est pas installé et de bloquer le démontage de l'élément porteur (2) et de l'élément de verrouillage (3) lorsque le dispositif d'arrêt (1) est installé, de sorte que l'élément porteur (2) présente un espace libre de montage (10) pour l'élément de verrouillage (3), qui est recouvert ou bloqué, en position d'emploi du dispositif d'arrêt (1), de telle manière que l'élément de verrouillage (3) ne puisse pas être amené dans sa position de démontage et
**en ce que** les éléments de montage (9) sont conçus de telle manière qu'une jonction de l'élément porteur (2) et de l'élément de verrouillage (3) ne soit possible qu'à un angle de montage (0) spécifié, étant entendu que l'angle de montage est spécifié de telle manière que l'élément de verrouillage (3) soit déplacé dans l'espace libre de montage (10) dans cette position d'angle de montage.

2. Dispositif d'arrêt selon la revendication 1, **caractérisé en ce que** l'élément de verrouillage (1) présente en plus un élément d'actionnement ou de préhension (5) librement accessible en état monté du dispositif d'arrêt (1), qui est relié au vérin de pivotement (6) de manière intégrale et dans le même matériau que celui-ci.

3. Dispositif d'arrêt selon la revendication 2, **caractérisé en ce que** l'élément porteur (2) et l'élément de verrouillage (3) sont fabriqués dans le même matériau, préférentiellement dans un matériau plastique, encore plus préférentiellement dans un matériau plastique renforcé par des fibres.

4. Dispositif d'arrêt selon la revendication 3, **caractérisé en ce que** le matériau plastique renforcé par des fibres, en particulier renforcé par des fibres de verre, contient une part de fibres comprise entre 10 et 60 %, préférentiellement de l'ordre de 50 %.

5. Dispositif d'arrêt selon l'une des revendications 1 à 4, **caractérisé en ce qu'**un cache (4) est prévu comme composant supplémentaire du dispositif d'arrêt (1) et **en ce que** le cache (4) recouvre, en état monté, un vérin de pivotement (6) de l'élément de verrouillage (3) au moins partiellement et/ou forme, en association avec l'élément porteur (2), un palier de vérin de pivotement (11).

6. Dispositif d'arrêt selon l'une des revendications 1 à 5, **caractérisé en ce que** l'élément porteur (2) forme, le cas échéant en association avec un cache (4), une butée (13) servant de palier de butée pour un composant à arrêter, de sorte que l'élément à verrouiller soit maintenu entre la butée (13) et l'élément de verrouillage (3) lorsque l'élément de verrouillage (3) est pivoté simultanément dans la position de verrouillage (25).

7. Dispositif d'arrêt selon l'une des revendications 1 à 6, **caractérisé en ce que** les éléments de montage (9) sont en outre conçus de telle manière que le pivotement d'un vérin de pivotement (6) d'un élément de verrouillage (3), après son enfilement dans l'élément porteur (2) le long d'un chemin d'enfilement spécifié par rapport à l'élément porteur (2), soit débloqué, de sorte que le vérin de pivotement (6) établisse, dans une zone spécifiée pour le vérin de pivotement, une liaison d'appui glissante avec au moins un coussinet (11) côté élément porteur.

8. Dispositif d'arrêt selon la revendication 7, **caractérisé en ce que** plusieurs coussinets ou demi-coussinets (11), disposés à une certaine distance dans le sens de l'axe de pivotement, sont prévus au niveau de l'élément porteur (2).

9. Dispositif d'arrêt selon l'une des revendications 1 à 8, **caractérisé en ce qu'**au moins un élément de butée axiale (7, 8) destiné au positionnement axial du vérin de pivotement (6) et donc de l'élément de verrouillage (3) est prévu au niveau d'un vérin de pivotement (6) de l'élément de verrouillage (3).

10. Dispositif d'arrêt selon les revendications 8 et 9, **caractérisé en ce que** plusieurs butées (7, 8) disposées à une certaine distance les unes par rapport aux autres dans le sens de projection du vérin de pivotement, sont prévues, dont au moins une est logée, par liaison mécanique, entre deux coussinets (11 ) disposés à une certaine distance l'un par rapport à l'autre, vu dans le sens axial.

11. Dispositif d'arrêt selon l'une des revendications 1 à 10, **caractérisé en ce qu'**un dispositif de fixation (20, 21, 22), qui est conçu de manière enfonçable ou actionnable, est prévu pour la fixation de l'élément de verrouillage (3) en position de déblocage (24) et en position de verrouillage (25).

12. Dispositif d'arrêt selon la revendication 11, **caractérisé en ce qu'**un élément d'encrantage (20) à retour élastique et enfonçable, qui s'encrante, en position de déblocage (24) et en position de verrouillage (25), dans un contre-élément côté vérin de pivotement et maintient ainsi l'élément de verrouillage (3) en position, est prévu comme dispositif de fixation au niveau de l'élément porteur (2).

13. Dispositif d'arrêt selon la revendication 12, **caractérisé en ce que** l'élément d'encrantage (20) est fabriqué dans le même matériau plastique que l'élément porteur (2) et relié à celui-ci en une pièce.

14. Dispositif d'arrêt selon la revendication 12 ou 13, **caractérisé en ce que** des encoches d'encrantage (22), décalées de 90° dans le sens radial, sont prévues au niveau du vérin de pivotement (6), des encoches dans lesquelles s'encrante, par liaison mécanique, un ergot d'encrantage (21) côté élément porteur en position de déblocage (24) et en position de verrouillage (25).

15. Dispositif d'arrêt selon l'une des revendications 1 à 14, **caractérisé en ce que** des trous de passage (26, 27, 28), servant de trous de vissage pour un assemblage vissé de l'élément porteur avec un emplacement de fixation spécifié, sont prévus sur l'élément porteur (2).

16. Dispositif d'arrêt selon l'une des revendications 1 à 15, **caractérisé en ce que** l'élément porteur (2) est conçu comme plaque porteuse (2) avec une paroi arrière formant au moins partiellement une surface de montage.

17. Dispositif d'arrêt selon l'une des revendications 1 à 16, **caractérisé en ce qu'**un dispositif d'arrêt (1) est disposé, au moyen de l'élément porteur affecté, sur une seule paroi latérale (18) ou préférentiellement à la même hauteur sur les parois latérales opposées (18, 29) d'une cabine (19), de sorte que l'axe de pivotement (12) de l'élément de verrouillage s'étende essentiellement dans le sens longitudinal du véhicule et **en ce qu'**une paroi arrière (23), sur laquelle est disposée une couchette (16) pouvant être relevée, est prévue entre les deux parois latérales (18, 29), de sorte qu'un élément de préhension (5) de l'élément de verrouillage (3) destiné au verrouillage de la couchette (16) dans sa position relevée contre la paroi arrière (23) soit pivotable essentiellement dans le sens transversal du véhicule.
